# EUROPÄISCHE PATENTSCHRIFT

(11) **EP 2 739 516 B1**
(45) Veröffentlichungstag und Bekanntmachung des Hinweises auf die Patenterteilung: **01.04.2020**
(21) Anmeldenummer: 12769957.7
(22) Anmeldetag: 05.09.2012
(51) Int. Cl.: B61L 3/22, B61L 3/24, H04L 27/26, B61L 27/00

(54) **VERFAHREN ZUM BETREIBEN EINER FAHRZEUGSEITIGEN EMPFANGSEINRICHTUNG EINES ZUGBEEINFLUSSUNGSSYSTEMS SOWIE FAHRZEUGSEITIGE EMPFANGSEINRICHTUNG**
METHOD FOR OPERATING A VEHICLE-SIDE RECEIVER DEVICE OF A TRAIN CONTROL SYSTEM AND VEHICLE-SIDE RECEIVER DEVICE
PROCÉDÉ PERMETTANT DE FAIRE FONCTIONNER UN DISPOSITIF DE RÉCEPTION CÔTÉ VÉHICULE D'UN SYSTÈME DE CONTRÔLE DES TRAINS, AINSI QUE DISPOSITIF DE RÉCEPTION CÔTÉ VÉHICULE

(30) Priorität: 21.09.2011 DE 102011083122
(43) Veröffentlichungstag der Anmeldung: 11.06.2014
(73) Patentinhaber: Siemens Mobility GmbH, 81739 München (DE)
(72) Erfinder: STEINGRÖVER, Andreas, 38120 Braunschweig (DE)
(86) Internationale Anmeldenummer: PCT/EP2012/067306
(87) Internationale Veröffentlichungsnummer: WO 2013/041376

(56) Entgegenhaltungen:
- EP-A2- 1 493 610
- DE-A1- 3 435 522
- GB-A- 2 441 227
- JP-A- 57 142 106
- JP-A- 2008 105 485
- US-A- 3 743 935
- CESARE BIANCHI: "Die FÃ 1/4 hrerraumsignalisierung auf der Direttissima Rom-Florenz", SIGNAL & DRAHT,, Bd. 77, Nr. 1-2, 1. Januar 1985 (1985-01-01), Seiten 9-16, XP001390054,
- KALUSCHA U ET AL: "LZB 825 - Kombi-Zugbeeinflussungssystem für den ÖPNV RandstadRail in den Niederlanden", SIGNAL + DRAHT, TELZLAFF VERLAG GMBH. DARMSTADT, DE, Bd. 102, Nr. 3, 1. März 2010 (2010-03-01), Seiten 6-11, XP001551490, ISSN: 0037-4997

## Beschreibung

Zugbeeinflussungssysteme dienen einer Steuerung und Überwachung von spurgebundenen Fahrzeugen, bei denen es sich neben Schienenfahrzeugen beispielsweise auch um spurgebundene Fahrzeuge mit Gummibereifung handeln kann. Im Rahmen des Betriebs der spurgebundenen Fahrzeuge werden hierbei üblicherweise Signale beziehungsweise Informationen von streckenseitigen Einrichtungen an eine fahrzeugseitige Empfangseinrichtung übertragen und hieraufhin fahrzeugseitig bei der Steuerung des betreffenden Fahrzeugs berücksichtigt. Die Übertragung der Signale an ein Schienenfahrzeug kann dabei beispielsweise derart erfolgen, dass mittels einer Modulation codierte Signale unter Verwendung von Gleisstromkreisen induktiv an eine Empfangseinrichtung des Fahrzeugs übertragen werden. So wird bei einem unter dem englischen Begriff "Pulse Code Cab Signaling" ("Führerstandssignalisierung") bekannten Typ von Zugbeeinflussungssystemen von einer fahrzeugseitigen Empfangseinrichtung des jeweiligen Fahrzeugs ein mittels einer Modulation in Form so genannter "Pulse Codes" codiertes Signal, d.h. eine periodisch ausgetastete Trägerfrequenz, empfangen. Sofern unterschiedliche Austastfrequenzen, d.h. unterschiedliche Codes, hierbei unterschiedlichen Geschwindigkeitsvorgaben entsprechen, werden entsprechende Systeme auch als "Speed-Code"-Systeme bezeichnet.

Bei Zugbeeinflussungssystemen der zuvor genannten Art ist in der Praxis eine Vielzahl von insbesondere durch unterschiedliche Trägerfrequenzen und/oder unterschiedliche Arten der Modulation gekennzeichneten unterschiedlichen Übertragungsverfahren gebräuchlich. Dabei können die jeweiligen Übertragungsverfahren herstellerspezifisch, betreiberspezifisch oder auch für das jeweilige Verkehrssystem spezifisch sein. Hieraus ergibt sich regelmäßig die Notwendigkeit, fahrzeugseitige Empfangseinrichtungen des jeweiligen Zugbeeinflussungssystems, die auch als Fahrzeuggeräte bezeichnet werden, spezifisch für den Einsatz auf den jeweiligen Strecken beziehungsweise spezifisch für das jeweilige Zugbeeinflussungssystem anzupassen. Dies schließt insbesondere das Vorsehen von speziellen Empfangsantennen und/oder von auf das jeweilige Modulationsverfahren speziell abgestimmten Empfangsbaugruppen ein.

Gemäß der DE 34 35 522 A1 ist beschrieben, dass bei einem Schienenfahrzeug ein verbautes Fahrzeuggerät einen Empfänger für Signale aufweisen kann, welche auf einen Schienenstrom aufmoduliert werden. Es ist vorgesehen, dass die Frequenz des Signals auf dem Fahrweg abschnittsweise geändert wird. Die Empfangseinrichtung im Fahrzeuggerät ist darauf ausgelegt, den Wechsel der Frequenzen bei Eintritt in einen neuen Abschnitt des Fahrwegs selbstständig zu ermitteln, ohne dass es im Fahrweg zusätzlicher Signalgeber hierfür bedarf.

Gemäß der GB 2 441 227 A ist außerdem beschrieben, dass eine Kommunikation zwischen den Fahrzeugen und dem Fahrweg auch mithilfe von Balisen erfolgen kann, welche ein Signal senden, welches in dem Fahrzeug erkannt werden kann. Die Empfangseinrichtung im Fahrzeug kann dabei so ausgelegt werden, dass Signale von Balisen unterschiedlicher Übertragungssysteme empfangen und ausgewertet werden können. Die Montage von Balisen erzeugt jedoch einen zusätzlichen Montageaufwand bei der Ausrüstung des Fahrweges.

EP 1 493610 A2 offenbart ein Verfahren zum Betreiben einer Empfangseinrichtung eines Zugbeeinflussungssystems. US 3 743 935 A zeigt ein Verfahren zum Betreiben einer fahrzeugseitigen Empfangseinrichtung eines Zugbeeinflussungssystems, wobei von der Empfangseinrichtung zumindest ein mittels einer Modulation codiertes Signal über zumindest einen Gleisstromkreis empfangen wird. Dabei werden bei dem bekannten Verfahren in benachbarten Gleisabschnitten unterschiedliche Trägerfrequenzen, etwa mit einer Frequenz von 1700 Hz und 2300 Hz, verwendet.

Der vorliegenden Erfindung liegt die Aufgabe zugrunde, ein besonders leistungsfähiges und vielseitig einsetzbares Verfahren zum Betreiben einer fahrzeugseitigen Empfangseinrichtung eines Zugbeeinflussungssystems anzugeben.

Diese Aufgabe wird erfindungsgemäß gelöst durch ein Verfahren zum Betreiben einer fahrzeugseitigen Empfangseinrichtung eines Zugbeeinflussungssystems, wie in den Ansprüchen beansprucht.

Das erfindungsgemäße Verfahren weist den grundlegenden Vorteil auf, dass sich die fahrzeugseitige Empfangseinrichtung des Zugbeeinflussungssystems automatisch in Bezug auf das jeweilige zur Anwendung kommende Übertragungsverfahren einstellt. Hierzu wird von der Empfangseinrichtung zunächst zumindest ein mittels einer Modulation codiertes Signal über zumindest einen Gleisstromkreis empfangen und zumindest eine Trägerfrequenz des zumindest einen empfangenen Signals ermittelt. Dies kann beispielsweise derart geschehen, dass eine Empfangsantenne der fahrzeugseitigen Empfangseinrichtung zunächst einen vorgegebenen oder vorgebbaren Frequenzbereich durchläuft und somit im Rahmen eines "Scanvorgangs" die zumindest eine Trägerfrequenz ermittelt.

Unter Berücksichtigung der ermittelten zumindest einen Trägerfrequenz ist es in der Folge möglich, das von dem jeweiligen Zugbeeinflussungssystem verwendete Übertragungsverfahren zu identifizieren und die Empfangseinrichtung spezifisch für dieses Übertragungsverfahren einzustellen. Dies bedeutet, dass seitens der fahrzeugseitigen Empfangseinrichtung selbst eine automatische Einstellung, d.h. eine "Selbstkonfiguration", in Bezug auf das jeweilige Zugbeeinflussungssystem beziehungsweise in Bezug auf das von diesem verwendete Übertragungsverfahren vorgenommen wird. Dabei ist das jeweilige Übertragungsverfahren zumindest durch die verwendete Trägerfrequenz beziehungsweise die verwendeten Trägerfrequenzen sowie die Art der verwendeten Modulation beziehungsweise die Arten der verwendeten Modulationen gekennzeichnet. Darüber hinaus ist es auch möglich, dass das jeweilige Übertragungsverfahren durch weitere für das betreffende Zugbeeinflussungssystem spezifische Parameter gekennzeichnet ist, die in diesem Fall im Rahmen des für das identifizierte Übertragungsverfahren spezifischen Einstellens der Empfangseinrichtung ebenfalls Berücksichtigung finden.

Das erfindungsgemäße Verfahren ist vorteilhaft, da es eine automatische Anpassung fahrzeugseitiger Empfangseinrichtungen eines Zugbeeinflussungssystems an das jeweilige Übertragungsverfahren ermöglicht, ohne dass hierfür hardwaretechnische oder softwaretechnische Anpassungen der Empfangseinrichtung erforderlich sind. Dies führt vorteilhafterweise dazu, dass auf spezifische Entwicklungen und Projektierungen für einzelne Projekte beziehungsweise Zugbeeinflussungssysteme verzichtet werden kann, wodurch sich in der Praxis erhebliche Vorteile im Hinblick auf Aufwand und Kosten ergeben.

Gemäß einer besonders bevorzugten Weiterbildung des erfindungsgemäßen Verfahrens umfasst das Einstellen der Empfangseinrichtung ein Abstimmen einer Empfangsantenne auf die ermittelte zumindest eine Trägerfrequenz. Dies ist vorteilhaft, da somit keine für die jeweilige zumindest eine Trägerfrequenz des Zugbeeinflussungssystems spezifische Empfangsantenne benötigt wird.

Vorzugsweise kann das erfindungsgemäße Verfahren auch derart ausgestaltet sein, dass die Art der Modulation des zumindest einen codierten Signals ermittelt wird und das von dem jeweiligen Zugbeeinflussungssystem verwendete Übertragungsverfahren unter weiterer Berücksichtigung der ermittelten Art der Modulation des zumindest einen codierten Signals identifiziert wird. Dies bietet den Vorteil, dass zusätzlich zu der ermittelten zumindest einen Trägerfrequenz auch die Art der Modulation des zumindest einen codierten Signals bei der Identifizierung des von dem jeweiligen Zugbeeinflussungssystem verwendeten Übertragungsverfahrens berücksichtigt werden kann. Hierdurch ist sichergestellt, dass auch im Hinblick auf solche Zugbeeinflussungssysteme, die identische Trägerfrequenzen verwenden, sich jedoch hinsichtlich der Art der Modulation der übertragenen Signale unterscheiden, eine eindeutige und korrekte Identifikation des jeweiligen Übertragungsverfahrens und damit eine für das jeweilige Übertragungsverfahren spezifische und korrekte Einstellung der Empfangseinrichtung ermöglicht wird.

Vorzugsweise ist das erfindungsgemäße Verfahren derart weitergebildet, dass die Art der Modulation des zumindest einen Signals und/oder das von dem jeweiligen Zugbeeinflussungssystem verwendete Übertragungsverfahren unter Berücksichtigung von Referenz-Trägerfrequenzen und/oder von Referenz-Arten von Modulationen ermittelt wird. Die Verwendung von Referenz-Trägerfrequenzen und/oder von Referenz-Arten von Modulation, die beispielsweise in Form einer Referenzliste von Trägerfrequenzen beziehungsweise einer Referenzliste von Arten von Modulationen bereitgestellt werden können, bei der Ermittlung der Art der Modulation des von den jeweiligen Zugbeeinflussungssystems verwendeten Übertragungsverfahren bietet den Vorteil, dass hierdurch eine eindeutige und unzweifelhafte Ermittlung der Art der Modulation des Signals beziehungsweise des verwendeten Übertragungsverfahrens ermöglicht wird. Hierbei können Referenz-Trägerfrequenzen und/oder Referenz-Arten von Modulationen beispielsweise in Form einer entsprechenden Bibliothek in einer Datenbank abgelegt und damit für eine Identifizierung der bekannten Übertragungsverfahren, d.h. insbesondere für eine Bestimmung gebräuchlicher Trägerfrequenzen sowie gebräuchlicher zur Codierung verwendeter Modulationsverfahren, verwendet werden.

Im Rahmen des erfindungsgemäßen Verfahrens kann mittels des zumindest einen Signals grundsätzlich eine beliebige Information über den zumindest einen Gleisstromkreis an die Empfangseinrichtung übertragen werden, d.h. es kann sich hierbei um beliebige Zugbeeinflussungsinformationen beziehungsweise - daten sowie entsprechende Fahrbefehle handeln.

Gemäß einer weiteren besonders bevorzugten Ausführungsform des erfindungsgemäßen Verfahrens wird von der Empfangseinrichtung mittels des zumindest einen Signals eine Information zu einer zulässigen Maximalgeschwindigkeit empfangen. Dies ist vorteilhaft, da entsprechende Zugbeeinflussungssysteme etwa in Form so genannter "Speed-Code"-Systeme vergleichsweise weit verbreitet und durch eine Vielzahl unterschiedlicher Ausprägungen hinsichtlich der verwendeten Übertragungsverfahren gekennzeichnet sind. Insbesondere für solche Systeme ist das erfindungsgemäße Verfahren daher vorteilhaft, da hierdurch hersteller- beziehungsweise projektspezifische Anpassungen beziehungsweise Neu- oder Änderungsentwicklungen der fahrzeugseitigen Empfangseinrichtung vermieden werden. Dabei kann von der Empfangseinrichtung mittels des zumindest einen Signals zusätzlich zu der Information zu der zulässigen Maximalgeschwindigkeit ein Empfang von weiteren Daten beziehungsweise Informationen erfolgen.

Vorzugsweise kann das erfindungsgemäße Verfahren auch derart ausgestaltet sein, dass das zumindest eine Signal eine Modulation in Form einer Puls-Code-Modulation aufweist. Unter einer Puls-Code-Modulation wird hierbei eine im Bereich des "Puls Code Cab Signaling" gebräuchliche Modulationsart bezeichnet, bei welcher die Informationsübertragung durch ein periodisches Austasten, d.h. Ein- und Ausschalten, der Trägerfrequenz erfolgt. Dies entspricht somit einer Amplitudenmodulation mit einer Änderung der Amplitude von 100%. Die Anwendung des erfindungsgemäßen Verfahrens auf Signale mit einer Modulation in Form einer Puls-Code-Modulation bietet den Vorteil, dass hierbei seitens der fahrzeugseitigen Empfangseinrichtung auf vergleichsweise einfache Art und Weise eine Bestimmung der Trägerfrequenz sowie der Art der Modulation möglich ist.

Vorzugsweise kann das erfindungsgemäße Verfahren auch derart ausgestaltet sein, dass das Verfahren bei erstmaliger Inbetriebnahme der Empfangseinrichtung, jeweils beim Einschalten der Empfangseinrichtung und/oder kontinuierlich während des Betriebs der Empfangseinrichtung durchgeführt wird. Das Verfahren weist somit den Vorteil auf, dass es in Abhängigkeit von den jeweiligen Anforderungen und der jeweiligen betrieblichen Situation flexibel einsetzbar ist. So ist es beispielsweise möglich, dass das Verfahren bei erstmaliger Inbetriebnahme der Empfangseinrichtung auf einer mit einer entsprechenden Zugbeeinflussungssystem ausgerüsteten Strecke automatisch durchgeführt und die Empfangseinrichtung hiernach dauerhaft spezifisch für das identifizierte Übertragungsverfahren eingestellt wird. Dies kann insbesondere eine dauerhafte Speicherung beziehungsweise Auswahl von Konfigurationsparametern beinhalten. Des Weiteren ist es auch möglich, dass das Verfahren jeweils beim Einschalten der Empfangseinrichtung durchgeführt und die hierdurch ermittelte Konfiguration bis zum Abschalten der Empfangseinrichtung beibehalten wird. Neben einer kontinuierlichen Durchführung des Verfahrens während des Betriebs der Empfangseinrichtung, d.h. beispielsweise in regelmäßig wiederkehrenden zeitlichen Abständen, ist es auch möglich, dass in Abhängigkeit von den jeweiligen Anforderungen und Gegebenheiten Mischformen der genannten Betriebsweisen realisiert beziehungsweise gewählt werden. Hinsichtlich der fahrzeugseitigen Empfangseinrichtung eines Zugbeeinflussungssystems liegt der vorliegenden Erfindung die Aufgabe zugrunde, eine besonders leistungsfähige und vielseitig einsetzbare fahrzeugseitige Empfangseinrichtung anzugeben.

Diese Aufgabe wird erfindungsgemäß gelöst durch eine fahrzeugseitige Empfangseinrichtung eines Zugbeeinflussungssystems, wie in den Ansprüchen beansprucht.

Die Vorteile der erfindungsgemäßen fahrzeugseitigen Empfangseinrichtung entsprechen derjenigen des erfindungsgemäßen Verfahrens, so dass diesbezüglich auf die entsprechenden vorstehenden Ausführungen verwiesen wird. Gleiches gilt hinsichtlich der im Folgenden genannten bevorzugten Weiterbildungen der erfindungsgemäßen Empfangseinrichtung in Bezug auf die entsprechenden bevorzugten Weiterbildungen des erfindungsgemäßen Verfahrens, so dass auch diesbezüglich auf die entsprechenden vorstehenden Erläuterungen verwiesen wird.

Vorzugsweise kann die erfindungsgemäße Empfangseinrichtung zum Abstimmen einer Empfangsantenne auf die ermittelte zumindest eine Trägerfrequenz ausgebildet sein.

Gemäß einer weiteren besonders bevorzugten Ausführungsform der erfindungsgemäßen Empfangseinrichtung ist die Empfangseinrichtung ausgebildet, die Art der Modulation des zumindest einen codierten Signals zu ermitteln und das von dem jeweiligen Zugbeeinflussungssystem verwendete Übertragungsverfahren unter weiterer Berücksichtigung der ermittelten Art der Modulation des zumindest einen codierten Signals zu identifizieren.

Vorzugsweise ist die erfindungsgemäße Empfangseinrichtung derart ausgestaltet, dass die Empfangseinrichtung ausgebildet ist, die Art der Modulation des zumindest einen Signals und/oder das von dem jeweiligen Zugbeeinflussungssystem verwendete Übertragungsverfahren unter Berücksichtigung von Referenz-Trägerfrequenzen und/oder von Referenz-Arten von Modulationen zu ermitteln.

Vorzugsweise kann die erfindungsgemäße Empfangseinrichtung auch ausgebildet sein, mittels des zumindest einen Signals eine Information zu einer zulässigen Maximalgeschwindigkeit zu empfangen.

Gemäß einer weiteren besonders bevorzugten Weiterbildung der erfindungsgemäßen Empfangseinrichtung ist diese ausgebildet, über den zumindest einen Gleisstromkreis mittels einer Modulation in Form einer Puls-Code-Modulation codierte Signale zu empfangen.

Gemäß einer weiteren besonders bevorzugten Ausführungsform ist die Empfangseinrichtung ausgebildet, bei ihrer erstmaligen Inbetriebnahme, jeweils bei ihrem Einschalten und/oder kontinuierlich während ihres Betriebs das von dem jeweiligen Zugbeeinflussungssystem verwendete Übertragungsverfahren zu identifizieren und sich spezifisch für das jeweilige identifizierte Übertragungsverfahren einzustellen.

Die Erfindung umfasst des Weiteren ein Zugbeeinflussungssystem mit einer erfindungsgemäßen Empfangseinrichtung beziehungsweise mit einer fahrzeugseitigen Empfangseinrichtung gemäß einer zuvor genannten bevorzugten Weiterbildungen der erfindungsgemäßen fahrzeugseitigen Empfangseinrichtung sowie mit dem zumindest einen Gleisstromkreis zum Übertragen des zumindest einen mittels der Modulation codierten Signals an die fahrzeugseitige Empfangseinrichtung.

Im Folgenden wird die Erfindung anhand von Ausführungsbeispielen näher erläutert. Hierzu zeigt die
- Figur: in einer schematischen Skizze ein Schienenfahrzeug mit einem Ausführungsbeispiel der erfindungsgemäßen fahrzeugseitigen Empfangseinrichtung.

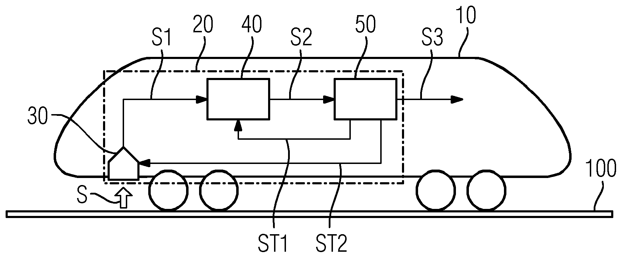

In der Figur ist ein Schienenfahrzeug 10 erkennbar, das sich entlang von Schienen beziehungsweise einem Gleis 100 bewegt. Das Schienenfahrzeug 10 weist eine fahrzeugseitige Empfangseinrichtung 20 auf, welche eine Empfangsantenne 30, ein Filter 40 sowie einen Demodulator 50 umfasst.

Zur Steuerung und Überwachung der Geschwindigkeit des Schienenfahrzeugs 10 und zur Informationsübertragung an dieses wird im Rahmen des beschriebenen Ausführungsbeispiels ein Zugbeeinflussungssystem verwendet, bei dem mittels Gleisstromkreisen mittels einer Modulation in Form einer Puls-Code-Modulation codierte Signale S an die Empfangseinrichtung 20 beziehungsweise genauer an die Empfangsantenne 30 der fahrzeugseitigen Empfangseinrichtung 20 übertragen werden. Diese induktive Übertragung von den Schienen 100 auf die Empfangsantenne 30 ist in der Figur durch einen Doppelpfeil angedeutet und mit dem Bezugszeichen S gekennzeichnet.

Um auf eine für die Art des jeweiligen übertragenen Signals S spezifische, d.h. insbesondere projekt- beziehungsweise herstellerspezifische, Anpassung der fahrzeugseitigen Empfangseinrichtung 20 an das jeweilige Zugbeeinflussungssystem verzichten zu können, ist die fahrzeugseitige Empfangseinrichtung 20 vorteilhafterweise derart ausgeführt, dass von der fahrzeugseitigen Empfangseinrichtung 20 zunächst zumindest eine Trägerfrequenz des empfangenen Signals S ermittelt wird. Dies kann beispielsweise derart geschehen, dass die Empfangsantenne 30 von dem Demodulator 50 beziehungsweise einer Steuereinrichtung desselben derart mittels eines Steuersignals ST2 angesteuert wird, dass seitens der Empfangsantenne 20 ein vorgegebener Frequenzbereich durchfahren beziehungsweise "gescannt" wird. Das hierbei von der Empfangsantenne 30 jeweils erfasste Signal wird von der Empfangsantenne 30 an das Filter 40 übertragen, was in der Figur durch das Bezugszeichen S1 angedeutet ist.

Mittels des Filters 40, das beispielsweise als einfaches analoges oder auch als digitales Filter ausgebildet sein kann, wird eine Frequenzselektion des Signals S1 vorgenommen. Dabei ist gemäß dem Ausführungsbeispiel der Figur auch das Filter 40 durch den Demodulator 50 mittels eines Steuersignals ST1 in Bezug auf unterschiedliche Frequenzen beziehungsweise Frequenzbereiche des Signals S1 abstimmbar.

Im Ergebnis wird somit ein frequenzselektiertes, pulse-codemoduliertes Signal S2 von dem abstimmbaren Filter 40 an den Demodulator 50 übermittelt.

Basierend auf dem Signal S2 ist es dem Demodulator 50 beispielsweise anhand einer Auswertung des Maximums der Empfangsfeldstärke möglich, anhand des durchgeführten Scanvorgangs die Trägerfrequenz des Signals S1 zu bestimmen. Sofern das betreffende Zugbeeinflussungssystem mehrere Trägerfrequenzen verwendet, d.h. beispielsweise benachbarte Gleisstromkreise mit unterschiedlichen Trägerfrequenzen arbeiten, können - insbesondere falls dies für eine eindeutige Identifizierung des verwendeten Übertragungsverfahrens erforderlich ist - auch diese Trägerfrequenzen in der zuvor beschriebenen Art und Weise bestimmt werden.

Der Demodulator 50 umfasst eine digitale Verarbeitungseinrichtung sowie eine in einer Datenbank abgelegte Bibliothek mit einer Liste von Referenz-Trägerfrequenzen und Referenz-Arten von Modulationen, die bekannt beziehungsweise gebräuchlich sind. Unter Verwendung der Referenzliste von Trägerfrequenzen ermittelt der Demodulator 50 die jeweilige Trägerfrequenz beziehungsweise die jeweiligen Trägerfrequenzen und identifiziert unter weiterer Berücksichtigung einer Referenzliste von Arten von Modulationen die Art der Modulation des zumindest einen codierten Signals sowie im Ergebnis damit das von dem jeweiligen Zugbeeinflussungssystem verwendete Übertragungsverfahren. In Abhängigkeit von den jeweiligen Umständen kann es hierbei ausreichend sein, dass lediglich ein Teil der von dem betreffenden Zugbeeinflussungssystem verwendeten Trägerfrequenzen und/oder Modulationen beziehungsweise "Pulse Codes" tatsächlich bestimmt wird, sofern die ermittelten Angaben für eine eindeutige Identifizierung des Übertragungsverfahrens beziehungsweise des Zugbeeinflussungssystems ausreichen. Dabei schließt eine Identifizierung des Übertragungsverfahrens insbesondere ein, dass seitens der Empfangseinrichtung im Ergebnis die Gesamtheit der verwendeten Trägerfrequenzen sowie der verwendeten Arten von Modulationen bekannt sind. Dies bedeutet, dass eine Kenntnis des Übertragungsverfahrens es ermöglicht, die fahrzeugseitige Empfangseinrichtung 20 spezifisch für das jeweilige Zugbeeinflussungssystem einzustellen. Dieses für das identifizierte Übertragungsverfahren spezifische Einstellen der fahrzeugseitigen Empfangseinrichtung 20 kann hierbei wiederum derart geschehen, dass der Demodulator 50 mittels Steuersignalen ST1 beziehungsweise ST2 eine entsprechende, nunmehr bis auf Weiteres unveränderliche Abstimmung des Filters 40 beziehungsweise der Empfangsantenne 30 vornimmt.

Im Rahmen des Betriebs der Empfangseinrichtung 20 wird von dem Demodulator 50 ausgangsseitig ein demodulierter Signalbegriff bereitgestellt, der in der Figur mit dem Bezugszeichen S3 bezeichnet ist. Dieser demodulierte Signalbegriff S3 wird in der Folge einem fahrzeugseitigen Steuerrechner des Zugbeeinflussungssystems zur Verfügung gestellt, der in der Figur aus Gründen der Übersichtlichkeit nicht dargestellt ist.

Von dem Steuerrechner des Zugbeeinflussungssystems wird nun anhand des demodulierten Signalbegriffs S3, d.h. letztlich anhand des über den zumindest einen Gleisstromkreis empfangenen Signals S, eine Steuerung beziehungsweise Beeinflussung des Schienenfahrzeugs 10 vorgenommen. Dies kann insbesondere dadurch geschehen, dass sichergestellt wird, dass eine mit dem Signal S empfangene Information hinsichtlich einer zulässigen Maximalgeschwindigkeit berücksichtigt wird beziehungsweise die Einhaltung dieser Maximalgeschwindigkeit überwacht wird.

Sofern für eine eindeutige Identifizierung des Übertragungsverfahrens mit unterschiedlichen Modulationen codierte Signale benötigt werden, ist es für eine Erfassung dieser Signale nicht zwangsläufig erforderlich, dass das jeweilige Fahrzeug zwecks Empfangs unterschiedlicher Signale entlang einer Strecke, d.h. beispielsweise der Schienen 100, bewegt wird. Stattdessen ist es beispielsweise auch denkbar, dass ein Fahrzeug, das vor einer rotes Licht anzeigenden Signaleinrichtung positioniert ist, das zugehörige Signal über den Gleisstromkreis empfängt und nach Umschaltung der Signaleinrichtung auf grünes Licht ein weiteres, diesem Signalzustand zugeordnetes Signal, d.h. ein mit einer anderen Modulation codiertes Signal, empfängt. Unter Berücksichtigung beider empfangenen Signale kann es sich nun ergeben, dass nunmehr eine eindeutige Identifizierung des verwendeten Übertragungsverfahrens möglich ist.

Entsprechend den vorstehenden Ausführungen läuft das beschriebene Verfahren somit im Wesentlichen derart ab, dass in Art eines Scanvorgangs durch eine entsprechende Abstimmung der Empfangsantenne 30 sowie des Filters 40 zunächst automatisch die Trägerfrequenz beziehungsweise die Trägerfrequenzen ermittelt und anschließend die jeweilige Art der Modulation, d.h. das jeweilige Modulationsverfahren, automatisch erkannt wird, indem aus einer Bibliothek mit bekannten herstellerspezifischen Trägerfrequenzen und Modulationsverfahren eine Auswahl getroffen wird. Somit erfolgt eine Selbstkonfiguration der fahrzeugseitigen Empfangseinrichtung 20 in Bezug auf das jeweilige zur Anwendung kommende Übertragungsverfahren, wodurch entsprechende Aufwände für eine projektspezifische Anpassung der fahrzeugseitigen Empfangseinrichtung 20 beziehungsweise ihrer Komponenten vorteilhafterweise vermieden werden.

Es sei darauf hingewiesen, dass die Empfangseinrichtung 20 selbstverständlich auch durch andere Komponenten realisiert werden könnte; des Weiteren wäre auch eine andere Funktionsaufteilung zwischen den Komponenten beispielsweise dahingehend denkbar, dass der Scanvorgang durch die Empfangsantenne 30 und das Filter 40 vollständig oder zumindest weitgehend selbständig durchgeführt wird.

In Abhängigkeit von den jeweiligen Gegebenheiten kann das zuvor beschriebene Verfahren bei erstmaliger Inbetriebnahme der fahrzeugseitigen Empfangseinrichtung 20, jeweils beim Einschalten der Empfangseinrichtung 20 und/oder kontinuierlich während des Betriebs der Empfangseinrichtung 20 durchgeführt werden.

Das zuvor beschriebene Verfahren sowie die entsprechende fahrzeugseitige Empfangseinrichtung lassen sich insbesondere auch in einer Migrationsphase, d.h. bei Ablösung eines bestehenden Zugbeeinflussungssystems durch ein neues Zugbeeinflussungssystem und damit verbunden der Verwendung eines neuen Übertragungsverfahrens, vorteilhaft anwenden. So ist in diesem Fall eine automatische Einstellung der Empfangseinrichtung in Bezug auf das zum jeweiligen Zeitpunkt verwendete Übertragungsverfahren möglich. Hierdurch wird insbesondere auch vermieden, dass fahrzeugseitig mehrere Empfangseinrichtungen, d.h. jeweils eine für das alte und das neue Zugbeeinflussungssystem, benötigt werden, wodurch sich Einsparungen im Hinblick auf den Platzbedarf, die Kosten sowie den erforderlichen Aufwand für Projektierung und Entwicklung entsprechender fahrzeugseitiger Empfangseinrichtungen ergeben.

## Patentansprüche

1. Verfahren zum Betreiben einer fahrzeugseitigen Empfangseinrichtung (20) eines Zugbeeinflussungssystems, wobei
- von der Empfangseinrichtung (20) zumindest ein mittels einer Modulation codiertes Signal (S) über zumindest einen Gleisstromkreis empfangen wird,
- zumindest eine Trägerfrequenz des zumindest einen empfangenen Signals (S) ermittelt wird,
- unter Berücksichtigung der ermittelten zumindest einen Trägerfrequenz das von dem jeweiligen Zugbeeinflussungssystem verwendete Übertragungsverfahren identifiziert wird, wobei dieses zumindest durch die verwendete Trägerfrequenz beziehungsweise die verwendeten Trägerfrequenzen sowie die Art der verwendeten Modulation beziehungsweise die Arten der verwendeten Modulationen gekennzeichnet ist, und
- die Empfangseinrichtung (20) spezifisch für das identifizierte Übertragungsverfahren eingestellt wird, wobei im Rahmen des spezifischen Einstellens die verwendete Trägerfrequenz beziehungsweise die verwendeten Trägerfrequenzen sowie die Art der verwendeten Modulation beziehungsweise die Arten der verwendeten Modulationen Berücksichtigung finden.

2. Verfahren nach Anspruch 1,
**dadurch gekennzeichnet, dass**
das Einstellen der Empfangseinrichtung (20) ein Abstimmen einer Empfangsantenne (30) auf die ermittelte zumindest eine Trägerfrequenz umfasst.

3. Verfahren nach Anspruch 1 oder 2,
**dadurch gekennzeichnet, dass**
- die Art der Modulation des zumindest einen codierten Signals (S) ermittelt wird und
- das von dem jeweiligen Zugbeeinflussungssystem verwendete Übertragungsverfahren unter weiterer Berücksichtigung der ermittelten Art der Modulation des zumindest einen codierten Signals (S) identifiziert wird.

4. Verfahren nach Anspruch 3,
**dadurch gekennzeichnet, dass**
die Art der Modulation des zumindest einen Signals (S) und/oder das von dem jeweiligen Zugbeeinflussungssystem verwendete Übertragungsverfahren unter Berücksichtigung von Referenz-Trägerfrequenzen und/oder von Referenz-Arten von Modulationen ermittelt wird.

5. Verfahren nach einem der vorangehenden Ansprüche,
**dadurch gekennzeichnet, dass**
von der Empfangseinrichtung (20) mittels des zumindest einen Signals (S) eine Information zu einer zulässigen Maximalgeschwindigkeit empfangen wird.

6. Verfahren nach einem der vorangehenden Ansprüche,
**dadurch gekennzeichnet, dass**
das zumindest eine Signal (S) eine Modulation in Form einer Puls-Code-Modulation aufweist.

7. Verfahren nach einem der vorangehenden Ansprüche,
**dadurch gekennzeichnet, dass**
das Verfahren bei erstmaliger Inbetriebnahme der Empfangseinrichtung (20), jeweils beim Einschalten der Empfangseinrichtung (20) und/oder kontinuierlich während des Betriebs der Empfangseinrichtung (20) durchgeführt wird.

8. Fahrzeugseitige Empfangseinrichtung (20) eines Zugbeeinflussungssystems, wobei die Empfangseinrichtung (20) ausgebildet ist,
- zumindest ein mittels einer Modulation codiertes Signal (S) über zumindest einen Gleisstromkreis zu empfangen,
- zumindest eine Trägerfrequenz des zumindest einen empfangenen Signals (S) zu ermitteln,
- unter Berücksichtigung der ermittelten zumindest einen Trägerfrequenz das von dem jeweiligen Zugbeeinflussungssystem verwendete Übertragungsverfahren zu identifizieren, wobei dieses zumindest durch die verwendete Trägerfrequenz beziehungsweise die verwendeten Trägerfrequenzen sowie die Art der verwendeten Modulation beziehungsweise die Arten der verwendeten Modulationen gekennzeichnet ist, und
- sich spezifisch für das identifizierte Übertragungsverfahren einzustellen, wobei im Rahmen des spezifischen Einstellens die verwendete Trägerfrequenz beziehungsweise die verwendeten Trägerfrequenzen sowie die Art der verwendeten Modulation beziehungsweise die Arten der verwendeten Modulationen berücksichtigbar sind.

9. Empfangseinrichtung nach Anspruch 8,
**dadurch gekennzeichnet, dass**
die Empfangseinrichtung (20) ausgebildet ist, eine Empfangsantenne (30) auf die ermittelte zumindest eine Trägerfrequenz abzustimmen.

10. Empfangseinrichtung nach Anspruch 8 oder 9,
**dadurch gekennzeichnet, dass**
die Empfangseinrichtung (20) ausgebildet ist,
- die Art der Modulation des zumindest einen codierten Signals (S) zu ermitteln und
- das von dem jeweiligen Zugbeeinflussungssystem verwendete Übertragungsverfahren unter weiterer Berücksichtigung der ermittelten Art der Modulation des zumindest einen codierten Signals (S) zu identifizieren.

11. Empfangseinrichtung nach Anspruch 10,
**dadurch gekennzeichnet, dass**
die Empfangseinrichtung (20) ausgebildet ist, die Art der Modulation des zumindest einen Signals (S) und/oder das von dem jeweiligen Zugbeeinflussungssystem verwendete Übertragungsverfahren unter Berücksichtigung von Referenz-Trägerfrequenzen und/oder von Referenz-Arten von Modulationen zu ermitteln.

12. Empfangseinrichtung nach einem der Ansprüche 8 bis 11,
**dadurch gekennzeichnet, dass**
die Empfangseinrichtung (20) ausgebildet ist, mittels des zumindest einen Signals (S) eine Information zu einer zulässigen Maximalgeschwindigkeit zu empfangen.

13. Empfangseinrichtung nach einem der Ansprüche 8 bis 12,
**dadurch gekennzeichnet, dass**
die Empfangseinrichtung (20) ausgebildet ist, über den zumindest einen Gleisstromkreis mittels einer Modulation in Form einer Puls-Code-Modulation codierte Signale (S) zu empfangen.

14. Empfangseinrichtung nach einem der Ansprüche 8 bis 13,
**dadurch gekennzeichnet, dass**
die Empfangseinrichtung (20) ausgebildet ist, bei ihrer erstmaligen Inbetriebnahme, jeweils bei ihrem Einschalten und/oder kontinuierlich während ihres Betriebs das von dem jeweiligen Zugbeeinflussungssystem verwendete Übertragungsverfahren zu identifizieren und sich spezifisch für das jeweilige identifizierte Übertragungsverfahren einzustellen.

15. Zugbeeinflussungssystem mit
- einer fahrzeugseitigen Empfangseinrichtung (20) nach einem der Ansprüche 8 bis 14 und
- dem zumindest einem Gleisstromkreis zum Übertragen des zumindest einen mittels der Modulation codierten Signals (S) an die fahrzeugseitige Empfangseinrichtung (20).

## Claims

1. Method for operating a vehicle-side receiver device (20) of a train control system, wherein
- at least one signal (S) which is encoded by means of modulation is received by the receiver device (20) via at least one track circuit,
- at least one carrier frequency of the at least one received signal (S) is determined,
- the transmission method used by the respective train control system is identified taking into account the determined at least one carrier frequency, wherein this is characterised at least by the carrier frequency or carrier frequencies used as well as the type of modulation or types of modulations used, and
- the receiver device (20) is set specifically for the identified transmission method, wherein in connection with the specific setting the carrier frequency or carrier frequencies used as well as the type of modulation or types of modulations used are taken into account.

2. Method according to claim 1,
**characterised in that**
the setting of the receiver device (20) comprises the tuning of a receiving antenna (30) to the determined at least one carrier frequency.

3. Method according to claim 1 or 2,
**characterised in that**
- the type of modulation of the at least one encoded signal (S) is determined, and
- the transmission method used by the respective train control system is identified taking further into account the determined type of modulation of the at least one encoded signal (S).

4. Method according to claim 3,
**characterised in that**
the type of modulation of the at least one signal (S) and/or the transmission method used by the respective train control system is determined taking into account reference carrier frequencies and/or reference types of modulations.

5. Method according to one of the preceding claims,
**characterised in that**
information on a maximum permissible speed is received by the receiver device (20) by means of the at least one signal (S).

6. Method according to one of the preceding claims,
**characterised in that**
the at least one signal (S) has a modulation in the form of a pulse code modulation.

7. Method according to one of the preceding claims,
**characterised in that**
the method is executed when the receiver device (20) is commissioned for the first time, each time the receiver device (20) is activated and/or continuously during the operation of the receiver device (20).

8. Vehicle-side receiver device (20) of a train control system, wherein the receiver device (20) is designed
- to receive at least one signal (S) which is encoded by means of modulation via at least one track circuit,
- to determine at least one carrier frequency of the at least one received signal (S),
- to identify the transmission method used by the respective train control system taking into account the determined at least one carrier frequency, wherein this is characterised at least by the carrier frequency or carrier frequencies used as well as the type of modulation or types of modulations used, and
- to set itself specifically for the identified transmission method, wherein in connection with the specific setting the carrier frequency or carrier frequencies used as well as the type of modulation or types of modulations used can be taken into account.

9. Receiver device according to claim 8,
**characterised in that**
the receiver device (20) is designed to tune a receiving antenna (30) to the determined at least one carrier frequency.

10. Receiver device according to claim 8 or 9,
**characterised in that**
the receiver device (20) is designed
- to determine the type of modulation of the at least one encoded signal (S), and
- to identify the transmission method used by the respective train control system taking further into account the determined type of modulation of the at least one encoded signal (S).

11. Receiver device according to claim 10,
**characterised in that**
the receiver device (20) is designed to determine the type of modulation of the at least one signal (S) and/or the transmission method used by the respective train control system taking into account reference carrier frequencies and/or reference types of modulations.

12. Receiver device according to one of claims 8 to 11,
**characterised in that**
the receiver device (20) is designed to receive information on a maximum permissible speed by means of the at least one signal (S).

13. Receiver device according to one of claims 8 to 12,
**characterised in that**
the receiver device (20) is designed to receive signals (S) which are encoded by means of modulation in the form of pulse code modulation via the at least one track circuit.

14. Receiver device according to one of claims 8 to 13,
**characterised in that**
the receiver device (20) is designed to identify the transmission method used by the respective train control system when it is commissioned for the first time, each time it is activated and/or continuously during its operation and to set itself specifically for the respective identified transmission method.

15. Train control system with
- a vehicle-side receiver device (20) according to one of claims 8 to 14, and
- the at least one track circuit for transmitting the at least one signal (S) which is encoded by means of modulation to the vehicle-side receiver device (20).

## Revendications

1. Procédé pour faire fonctionner un dispositif (20) de réception du côté véhicule d'un système d'arrêt automatique des trains, dans lequel
- on reçoit, par l'intermédiaire d'au moins un circuit de voie, au moins un signal (S) codé au moyen d'une modulation,
- on détermine au moins une fréquence porteuse du au moins un signal (S) reçu,
- en tenant compte de la au moins une fréquence porteuse déterminée, on identifie le procédé de transmission utilisé par le système respectif d'arrêt automatique des trains, celui-ci étant caractérisé au moins par la fréquence porteuse utilisée ou, respectivement, la fréquence porteuse utilisée et le type de modulation utilisé ou le type des modulations utilisées, et
- on règle le dispositif (20) de réception spécifiquement pour le procédé de transmission identifié, dans lequel, dans le cadre du réglage spécifique, on tient compte de la fréquence porteuse utilisée ou, respectivement, de la fréquence porteuse utilisée ainsi que du type de la modulation utilisée ou, respectivement, des types des modulations utilisées.

2. Procédé suivant la revendication 1,
**caractérisé en ce que**
le réglage du dispositif (20) de réception comprend un accord d'une antenne (30) de réception à la au moins une fréquence porteuse déterminée.

3. Procédé suivant la revendication 1 ou 2,
**caractérisé en ce que**
- on détermine le type de la modulation du au moins un signal (S) codé et
- on identifie le procédé de transmission utilisé par le système respectif d'arrêt automatique des trains en prenant, en outre, en compte le type déterminé de modulation du au moins un signal (S) codé.

4. Procédé suivant la revendication 3,
**caractérisé en ce que**
l'on détermine le type de la modulation du au moins un signal (S) et/ou le procédé de transmission utilisé par le système respectif d'arrêt automatique des trains, en tenant compte de fréquences porteuses de référence et/ou de types de références de modulations.

5. Procédé suivant l'une des revendications précédentes,
**caractérisé en ce que**
l'on reçoit, par le dispositif (20) de réception, au moyen du au moins un signal (S), une information sur une vitesse maximum autorisée.

6. Procédé suivant l'une des revendications précédentes,
**caractérisé en ce que**
le au moins un signal (S) a une modulation sous la forme d'une modulation par code d'impulsion.

7. Procédé suivant l'une des revendications précédentes,
**caractérisé en ce que**
l'on effectue le procédé lors de la première mise en fonctionnement du dispositif (20) de réception, respectivement, lors de la mise en circuit du dispositif (20) de réception et/ou en continu pendant le fonctionnement du dispositif (20) de réception.

8. Dispositif (20) de réception du côté véhicule d'un système d'arrêt automatique des trains, le dispositif (20) de réception étant constitué,
- pour recevoir, par au moins un circuit de voie au moins un signal (S) codé au moyen d'une modulation,
- déterminer au moins une fréquence porteuse du au moins un signal (S) reçu,
- en tenant compte de la au moins une fréquence porteuse déterminée, pour identifier le procédé de transmission utilisé par le système respectif d'arrêt automatique des trains, celui-ci étant caractérisé au moins par la fréquence porteuse utilisée ou, respectivement, la fréquence porteuse utilisée et le type de modulation utilisé ou le type des modulations utilisées, et
- se régler spécifiquement pour le procédé de transmission identifié, dans lequel, dans le cadre du réglage spécifique, on peut prendre en compte la fréquence porteuse utilisée ou, respectivement, des fréquences porteuses utilisées ainsi que le type de la modulation utilisée ou, respectivement les types des modulations utilisées.

9. Dispositif de réception suivant la revendication 8,
**caractérisé en ce que**
le dispositif (20) de réception est constitué pour accorder une antenne (30) de réception à la au moins une fréquence porteuse déterminée.

10. Dispositif de réception suivant la revendication 8 ou 9,
**caractérisé en ce que**
le dispositif (20) de réception est constitué
- pour déterminer le type de la modulation du au moins un signal (S) codé et
- pour identifier le procédé de transmission utilisé par le système respectif d'arrêt automatique des trains en prenant en compte, en outre, le type déterminé de la modulation du au moins un signal (S) codé.

11. Dispositif de réception suivant la revendication 10,
**caractérisé en ce que**
le dispositif (20) de réception est constitué pour déterminer le type de la modulation du au moins un signal (S) et/ou le procédé de transmission utilisé par le système respectif d'arrêt automatique des trains, en tenant compte de fréquences porteuses de références et/ou de types de référence de modulations.

12. Dispositif de réception suivant l'une des revendications 8 à 11,
**caractérisé en ce que**
le dispositif (20) de réception est constitué pour recevoir, au moyen du au moins un signal (S), une information sur une vitesse maximum autorisée.

13. Dispositif de réception suivant l'une des revendications 8 à 12,
**caractérisé en ce que**
le dispositif (20) de réception est constitué pour recevoir, par le au moins un circuit de voie, des signaux codés au moyen d'une modulation sous la forme d'une modulation par code d'impulsion.

14. Dispositif de réception suivant l'une des revendications 8 à 13,
**caractérisé en ce que**
le dispositif (20) de réception est constitué pour identifier, lors de sa mise en fonctionnement pour la première fois, respectivement, lors de sa mise en circuit et/ou en continu pendant son fonctionnement, le procédé de transmission utilisé par le système respectif d'arrêt automatique des trains et se régler spécifiquement pour le procédé de transmission identifié.

15. Système d'arrêt automatique des trains comprenant
- un dispositif (20) de réception du côté véhicule suivant l'une des revendications 8 à 14 et
- le au moins un circuit de voie pour transmettre le au moins un signal (S) codé au moyen de la modulation au dispositif (20) de réception du côté véhicule.
